# EUROPÄISCHE PATENTSCHRIFT

(11) **EP 3 308 424 B1**
(45) Veröffentlichungstag und Bekanntmachung des Hinweises auf die Patenterteilung: **07.10.2020**
(21) Anmeldenummer: 16728301.9
(22) Anmeldetag: 09.06.2016
(51) Int. Cl.: H01Q 1/04, H01Q 1/12, H01Q 1/24

(54) **SCHACHTANTENNENSYSTEM ZUR MOBILEN KOMMUNIKATION**
SHAFT ANTENNA SYSTEM FOR MOBILE COMMUNICATION
SYSTÈME D'ANTENNE DE PUITS POUR DES COMMUNICATIONS MOBILES

(30) Priorität: 11.06.2015 DE 102015007505
(43) Veröffentlichungstag der Anmeldung: 18.04.2018
(73) Patentinhaber: TELEFONAKTIEBOLAGET LM ERICSSON (PUBL), 164 83 Stockholm (SE)
(72) Erfinder: SCHLOSSER, Maximilian, 83022 Rosenheim (DE)
(74) Vertreter: Flach Bauer Stahl Patentanwälte Partnerschaft mbB
(86) Internationale Anmeldenummer: PCT/EP2016/063095
(87) Internationale Veröffentlichungsnummer: WO 2016/198491

(56) Entgegenhaltungen:
- US-A- 5 583 492
- US-A1- 2006 226 325
- US-A1- 2012 112 981
- US-B1- 8 011 628

## Beschreibung

Die hier vorliegende Erfindung beschreibt ein Schachtantennensystem zur mobilen Kommunikation. Schachtantennen werden häufig dort eingesetzt, wo normale Antennen nicht eingesetzt werden können, weil diese das Landschaftsbild stören. Dies trifft insbesondere auf Innenstädte zu, wo Vorschriften den Einsatz weit sichtbarer Mobilfunkantennen verbieten. Schachtantennen werden dabei vorzugsweise im Boden oder in der Fahrbahn verbaut und erreichen durch Mehrfachreflektion an den umliegenden Gebäuden eine beachtliche Ausbreitungsreichweite.

Aus der US 2005 / 0 152 700 A1 ist ein Antennensystem in einem Schacht bekannt. In diesem Schacht befindet sich eine Antenne, die durch eine Einzelöffnung eingeführt werden kann. Die Einzelöffnung wird durch einen Deckel abgedeckt. Die Antenne wird an einen Receiver angeschlossen, der wiederum mit einer Glasfaser verbunden ist. Eine Batterie stellt die Versorgung des Receivers und der Antenne sicher.

Auch aus der GB 2 326 002 A ist eine solche Schachtantenne bekannt. Die Schachtantenne wird in ein Loch im Boden eingesetzt und über eine unterirdische Zuführung mit Energie und Daten versorgt. Das Antennensystem ist dabei in einem Gehäuse integriert, wobei die Oberfläche des Gehäuses bündig an der Fahrbahnoberfläche anliegt.

Eine Schachtantenne ist aus der US 2006/226325 A1 bekannt. Diese Schachtantenne dient dazu, um Zählerwerte eines Wasserzählers übertragen zu können. Es ist ein Loch im Boden vorgesehen, welches durch Betonwände umgrenzt ist. In dem Loch ist z.B. der Wasserzähler angeordnet. Die Betonwände umfassen eine Auflageschulter, auf der ein Deckel angeordnet ist, um das Loch zu verschließen. Zwischen der Auflageschulter und dem Deckel ist noch ein Einhängerahmen angeordnet, der sich in Richtung des Lochbodens erstreckt und eine Auflagefläche bietet, um eine Antenne aufzunehmen, die dann zwischen dem Wasserzähler und dem Deckel positioniert ist.

Einen ähnlichen Aufbau wie die US 2006/226325 A1 zeigt auch die US 8 011 628 B1. Auch hier wird eine Schachtantenne beschrieben, um Zählerwerte eines Wasserzählers übertragen zu können. Der dortige Einhängerahmen ist noch in seiner Länge verstellbar.

Die US 5 583 492 beschreibt eine Schachtantenne um Informationen über die Beschaffenheit eines Energiekabels zu erhalten. Hierzu ist ein Sensor mit dem Energiekabel innerhalb des Schachts gekoppelt, wobei der Sensor Daten an eine Antenne überträgt, die mit sehr geringen Leistungen arbeitet.

Aus der US 2012/112981 A1 ist ebenfalls eine Schachtantenne bekannt, die dazu dient, um Zählerwerte eines Wasserzählers übertragen zu können. Ein Antennengehäuse wird dabei in einen Rahmen eingeschoben, der einteilig mit einem Deckel ausgebildet ist, wobei der Deckel im eingesetzten Zustand in den Schacht die Öffnung des Schachtes verschließt. Über eine gewindeförmige Verstelleinrichtung kann das eingesetzte Antennengehäuse in Richtung des Deckels verschoben werden, wobei ein Abstand zwischen dem Deckel und dem Antennengehäuse eingehalten wird.

Eine weitere Schachtantenne ist aus der EP 1 801 293 A2 bekannt. Die Schachtantenne weist kein eigenes Gehäuse auf, sondern wird an die Unterseite eines bereits existierenden Kanaldeckels angeordnet.

Nachteilig an den Schachtantennen aus dem Stand der Technik ist, dass durch Belastungen des Kanaldeckels, bzw. des Antennengehäuses, wie sie durch Fußgänger oder Fahrzeuge hervorgerufen werden, Schwingungen an das Antennensystem übertragen werden. Eine derartige mechanische Kopplung führt zu einer deutlichen Verringerung der Lebenszeit der Antenne.

Es ist daher die Aufgabe der Erfindung ein Schachtantennensystem zu schaffen, welches einerseits möglichst nahe an der Oberfläche angeordnet ist und andererseits gleichzeitig von Schwingungen, die durch Fahrzeuge oder Fußgänger ausgehen, entkoppelt ist.

Die Aufgabe wird bezüglich eines Schachtantennensystems gemäß den im Anspruch 1 angegebenen Merkmalen und bezüglich der Verwendung eines Antennengehäuses gemäß den im Anspruch 13 angegebenen Merkmalen gelöst. In den Unteransprüchen sind vorteilhafte Weiterbildungen der Erfindung angegeben.

Das erfindungsgemäße Schachtantennensystem dient zur mobilen Kommunikation, insbesondere zur Übertragung von Telefonie und/oder Datenpaketen. Es umfasst dabei ein Antennengehäuse, in welchem zumindest eine Breitbandantenne eingebracht ist. Die Breitbandantenne dient zur Übertragung von Sprach-, Video und Breitbanddiensten. Weiterhin umfasst das Schachtantennensystem einen Abstützrahmen, der eine Rahmenober- und eine Rahmenunterseite aufweist. In der Höhe der Rahmenoberseite befindet sich eine Einführöffnung, an die sich ein Aufnahmeraum anschließt, in dem das Antennengehäuse angeordnet ist. Bei dem Aufnahmeraum kann es sich beispielsweise um einen Hohlraum in der Fahrbahn oder in einer Fußgängerzone und damit um einen Hohlraum in dem Abstützrahmen handeln. Das Antennengehäuse weist zumindest eine Abstützeinrichtung auf, durch die es innerhalb des Abstützrahmens gehalten ist. Weiter weist das Schachtantennensystem einen Abschlussdeckel auf, der die Einführöffnung und den Aufnahmeraum verschließt und an seinem Randbereich zumindest mittelbar an dem Abstützrahmen abgestützt ist und mit seiner Innenseite eine Oberseite des Antennengehäuses überdeckt. Dieser Abschlussdeckel ist diejenige Komponente innerhalb des Schachtantennensystems, die durch Fahrzeuge oder Fußgänger direkt belastet wird. Der Abschlussdeckel weist außerdem einen Zentralbereich auf, dessen nach unten weisende Fläche zumindest 60% der gesamten nach unten weisenden Innenfläche des Abschlussdeckels beträgt, wobei der Zentralbereich kontaktfrei oberhalb der benachbarten Oberseite des Antennengehäuses zu dieser angeordnet ist. Die Unterseite des Abschlussdeckels weist im Längsschnitt zumindest im Zentralbereich eine Einbuchtung auf, die beispielsweise eine konkave Form haben kann, so dass der Zentralbereich stets kontaktfrei oberhalb der benachbarten Oberseite des Antennengehäuses angeordnet ist. Die konkave Form, bzw. die Einbuchtung ist derart gewählt, dass auch bei einer besonders hohen Belastung, beispielsweise durch einen Lastwagen, der Mittelpunkt des Zentralbereichs stets von der Oberseite des Antennengehäuses beabstandet ist. Für den Fall, dass die Unterseite des Abschlussdeckels unbelastet im Längsschnitt eine konkave Form aufweist, kann diese bei sehr starker Belastung eine Form aufweisen, die in etwa parallel zu der Stirnseite des Abstützrahmens, oder parallel zu der Oberseite des Antennengehäuses verläuft.

Besonders vorteilhaft ist dabei, dass das Schachtantennensystem neben einem Antennengehäuse einen von dem Antennengehäuse getrennten Abschlussdeckel aufweist. Das Antennengehäuse und der Abschlussdeckel sind mechanisch voneinander entkoppelt. Dies bedeutet, dass eine Kraft, die auf den Abschlussdeckel einwirkt, beispielsweise durch ein Fahrzeug oder einen Fußgänger, nicht auf das Antennengehäuse wirkt, sondern über den Randbereich des Abschlussdeckels in den Abstützrahmen abgeleitet wird. Unter dem Wortlaut, dass sich der Abschlussdeckel "zumindest mittelbar" an dem Abstützrahmen abstützt ist zu verstehen, dass der Randbereich des Abschlussdeckels auf dem Abstützrahmen und/oder auf dem Teil der Abstützeinrichtung aufliegt, die sich wiederum an dem Abstützrahmen abstützt. Eine mechanische Kopplung zwischen dem Abschlussdeckel und dem Antennengehäuse wird daher vermieden. Vibrationen, die auf den Abschlussdeckel einwirken, werden daher nicht an das Antennengehäuse weitergegeben. Die Lebensdauer der sich innerhalb des Antennengehäuses ausgebildeten elektrischen Komponenten erhöht sich dadurch beträchtlich.

Bei der Abstützeinrichtung kann es sich um n-Vorsprünge oder um einen umlaufenden Flansch handeln, wobei die Vorsprünge oder der umlaufende Flansch auf einem ersten Auflager aufliegen, das Teil des Abstützrahmens ist und sich in Richtung des Aufnahmeraums hin erstreckt. Der Einsatz von Vorsprüngen verhindert außerdem, dass sich das Antennengehäuse innerhalb des Abstützrahmens verdrehen lässt. Ein Flansch könnte als Verdrehschutz an seiner Unterseite Rippel aufweise, die in Ausbuchtungen innerhalb der ersten Auflage greifen. Umgekehrt würde genauso ein Verdrehschutz entstehen.

Um das Einführen des Antennengehäuses in den Abstützrahmen zu erleichtern ist das erste Auflager von der Rahmenoberseite hin zu der Rahmenunterseite zumindest abschnittsweise konisch verjüngt. Ergänzt oder alternativ dazu ist es auch möglich, dass das erste Auflager zumindest teilweise parallel zu einer Stirnseite des Abstützrahmens, also parallel zu der Fahrbahnoberfläche ausgebildet ist.

Für den Fall, dass die Abstützreinrichtung beispielsweise als Flansch ausgebildet ist, kann der Abschlussdeckel an der Unterseite seines Randbereichs einzig auf dem Teil der zumindest einen Abstützeinrichtung aufliegen, der wiederum auf der ersten Auflage aufliegt. Kräfte, die durch ein Fahrzeug in den Abschlussdeckel eingeleitet werden, werden von diesem über seinen Randbereich senkrecht nach unten (also senkrecht zur Fahrbahnoberfläche) in den Abstützrahmen geleitet. Die Tatsache, dass diese Kräfte auch zumindest über den Teil der Abstützeinrichtung in den Abstützrahmen geleitet werden ist unschädlich, weil der Randbereich des Abschlussdeckels formschlüssig und kraftschlüssig an dem Teil der Abstützeinrichtung anliegt, der wiederum formschlüssig und kraftschlüssig auf der ersten Auflage aufliegt.

Alternativ dazu ist es auch möglich, dass der Abschlussdeckel an der Unterseite seines Randbereichs einzig auf einem zweiten Auflager oder sowohl auf dem zweiten Auflager, als auch auf dem Teil der Abstützeinrichtung aufliegt, der wiederum auf dem ersten Auflager aufliegt. Dabei umfasst der Abstützrahmen neben dem ersten Auflager noch ein zweites Auflager, das sich wie das erste Auflager ebenfalls in Richtung des Aufnahmeraums erstreckt. Eine Auflagefläche des zweiten Auflagers ist dabei näher an der Rahmenoberseite angeordnet, als eine Auflagefläche des ersten Auflagers. Das erste Auflager erstreckt sich außerdem weiter in Richtung des Aufnahmeraums als das zweite Auflager, oder das zweite Auflager umfasst zumindest eine Ausnehmung, durch die das erste Auflager gebildet ist. Vorteilhaft ist dabei, dass die Unterseite des Randbereichs des Abschlussdeckels einzig auf dem zweiten Auflager aufliegt und dabei die Abstützeinrichtung des Antenenngehäuses nicht berührt, bzw. berührungsfrei zu dieser angeordnet ist. Dadurch erfolgt eine verbesserte mechanische Entkopplung und es werden noch weniger Schwingungen und Vibrationen, die durch Fußgänger und Fahrzeuge verursacht werden, auf das Antennengehäuse übertragen.

Bei dem ersten und zweiten Auflager handelt es sich beispielsweise um eine Auflageschulter oder um eine Auflagenase. Die beiden Auflager können dabei parallel zueinander angeordnet sein. Wie bei dem ersten Auflager gilt auch für das zweite Auflager, dass sich dieses von der Rahmenoberseite zu der Rahmenunterseite zumindest abschnittsweise konisch verjüngt und/oder dass dieses zumindest teilweise parallel zu der Stirnseite des Abschnittrahmens ausgebildet ist. Eine solche konische Verjüngung hilft dabei den Abschlussdeckel leichter einsetzen zu können.

Die nach oben weisende Außenseite des Abschlussdeckels liegt dabei bündig an einer Stirnseite des Abstützrahmens oder bündig an der Fahrbahnoberfläche an. Dadurch wird verhindert, dass Fußgänger in ihrem Tritt gestört werden, oder dass die Rollgeräusche des Fahrzeugs kurzfristig stark zunehmen.

Die Abstützeinrichtung und das Antennengehäuse sind vorzugsweise einteilig ausgebildet. Eine mehrteilige Ausbildung, also beispielsweise durch Anschrauben der Abstützeinrichtung an das Antennengehäuse wäre auch möglich. Auch eine Verklebung der Abstützeinrichtung mit dem Antennengehäuse ist erlaubt, weil das Antennengehäuse selbst durch Fußgänger, bzw. Fahrzeuge nicht belastet wird.

Der Abstützrahmen weist zusätzlich Umfangsseiten auf, die von der Rahmenoberseite zur Rahmenunterseite zumindest abschnittsweise divergieren. Dies bedeutet, dass sich der Abstützrahmen bzgl. seines Außendurchmessers nach unten hin verbreitert, so dass dieser nach dem ordnungsgemäßen Einsetzen in eine Öffnung in der Fahrbahn nicht mehr herausgezogen werden kann. Dies wird durch Erde und/oder Teer verhindert.

Um die Antennenelektronik vor Umwelteinflüssen zu schützen kann zusätzlich zwischen dem Abstützrahmen und dem Abstützdeckel ein Dichtelement ausgebildet sein. Gleiches ist auch zwischen dem Abstützrahmen und dem Antennengehäuse möglich. Vorzugsweise ist das Antennengehäuse wasserdicht, bzw. eine Öffnung des Antennengehäuses zeigt nach unten, also weg von der Unterseite des Abschlussdeckels.

Generell sind Begriffe wie "oben" und "unten" derart zu verstehen, dass die Fahrbahnoberseite oben und das Ende des Aufnahmeraums unten und damit von der Fahrbahnoberseite am weitesten beabstandet ist. Das Schachtantennensystem ist außerdem von einer Zentralachse durchsetzt, wobei der Mittelpunkt der Zentralachse vorzugsweise durch die Mitte des Zentralbereichs des Abschlussdeckels verläuft. Die Fahrbahn, bzw. die Stirnseite des Abstützrahmens verläuft senkrecht zu dieser gedachten Zentralachse.

Verschiedene Ausführungsbeispiele der Erfindung werden nachfolgend unter Bezugnahme auf die Zeichnungen beispielhaft beschrieben. Gleiche Gegenstände weisen dieselben Bezugszeichen auf. Die entsprechenden Figuren der Zeichnungen zeigen im Einzelnen:
- Figur 1:: einen Längsschnitt durch das erfindungsgemäße Schachtantennensystem mit einem Antennengehäuse, einem Abstützrahmen und einem Abschlussdeckel;
- Figur 2:: eine Draufsicht auf das erfindungsgemäße Schachtantennensystem mit abgenommenem Abschlussdeckel;
- Figur 3A:: einen Längsschnitt durch das erfindungsgemäße Schachtantennensystem, wobei einzig der Abstützrahmen in einen vorbereiteten Schacht eingesetzt ist;
- Figur 3B:: einen Längsschnitt durch das erfindungsgemäße Schachtantennensystem, bei dem das Antennengehäuse in den Abstützrahmen eingehängt ist;
- Figur 4A:: einen Längsschnitt durch das erfindungsgemäße Schachtantennensystem, wobei der Abschlussdeckel mit seinem Randbereich auf dem Teil einer Abstützeinrichtung des Antennengehäuses aufliegt, der wiederum auf dem Abstützrahmen aufliegt;
- Figur 4B:: einen Längsschnitt durch das erfindungsgemäße Schachtantennensystem, wobei der Abschlussdeckel mit seinem Randbereich einzig auf dem Abstützrahmen aufliegt und wobei die Abstützeinrichtung des Antennengehäuses ebenfalls einzig auf dem Abstützrahmen aufliegt;
- Figur 5A-5E:: verschiedene Längsschnitte durch den Abstützrahmen; und
- Figur 6:: eine vereinfachte räumliche Darstellung des Abstützrahmens.

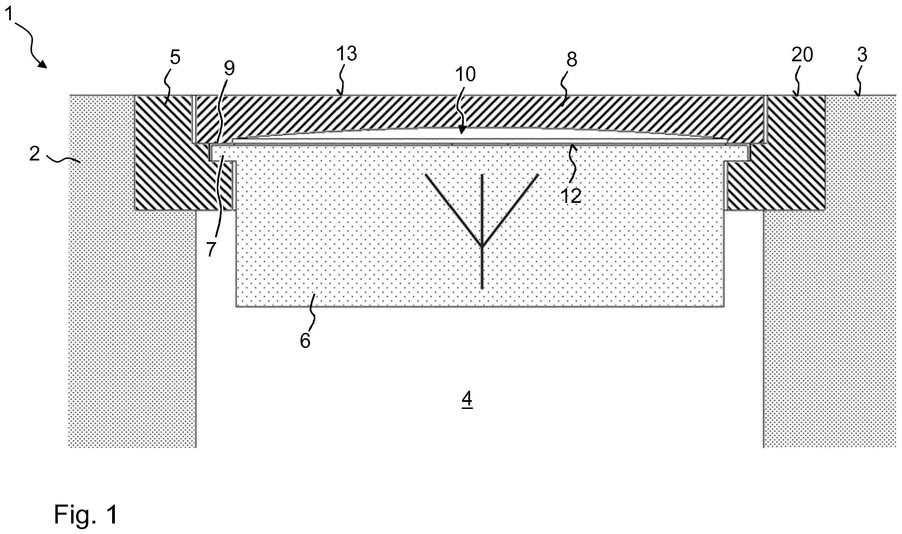

Figur 1 zeigt einen Längsschnitt durch das erfindungsgemäße Schachtantennensystem 1 mit einem Abstützrahmen 5, einem Antennengehäuse 6 und einem Abschlussdeckel 8. Der Abstützrahmen 5 wird in ein Loch, bzw. in eine Ausnehmung 4 im Boden 2 eingebracht. Bei einer Oberfläche des Bodens 2 kann es sich beispielsweise um die Fahrbahn 3 handeln. In dem Antennengehäuse 6 ist zumindest eine Antenne eingebracht. Die zumindest eine Antenne kann federnd innerhalb des Antennengehäuses 6 gelagert sein. Bei der zumindest einen Antenne handelt es sich insbesondere um eine Breitbandantenne, die sowohl zur Übertragung von Sprach- bzw. Videodiensten, als auch zur Übertragung von Breitbanddiensten herangezogen werden kann. Das Antennengehäuse 6 und damit die Antenne selbst, sollten möglichst nahe an der Oberfläche, also möglichst nahe an der Fahrbahn 3 angeordnet sein, damit eine hohe Reichweite erzielt werden kann.

Hierzu weist das Antennengehäuse 6 zumindest eine Abstützeinrichtung 7 auf, mit der das Antennengehäuse 6 in den Abstützrahmen 5 ein- oder aufgehängt gehalten ist. Innerhalb des Abstützrahmens 5 und unterhalb des Abstützrahmens 5 ist der Aufnahmeraum 4 gebildet. Innerhalb des Aufnahmeraums 4 ist das Antennengehäuse 6 angeordnet. Das Antennengehäuse 6 kann weiter nach unten ragen, als beispielsweise der Abstützrahmen 5.

Der Abschlussdeckel 8 verschließt dabei diesen Aufnahmeraum 4 und überdeckt gleichzeitig das Antennengehäuse 6. Der Abschlussdeckel 8 umfasst einen nach unten gerichteten Randbereich 9 über den sich der Abschlussdeckel 8 zumindest mittelbar an dem Abstützrahmen 5 abstützt.

Der Abschlussdeckel 8 weist außerdem einen Zentralbereich 10 auf, dessen nach unten weisende Fläche zumindest 60% der gesamten nach unten weisenden Innenfläche des Abschlussdeckels 8 beträgt, wobei der Zentralbereich 10 kontaktfrei oberhalb der benachbarten Oberseite 12 des Antennengehäuses 6 zu dieser angeordnet ist.

Eine Belastung des Abschlussdeckels 8 durch einen Fußgänger oder ein Kraftfahrzeug führt dazu, dass die in den Abschlussdeckel 8 eingeleitete Kraft einzig über dessen Randbereich 9 in den Abstützrahmen 5 abgeleitet wird.

Die nach oben weisende Außenseite 13 des Abschlussdeckels 8 liegt bündig an einer Stirnseite 20 des Abstützrahmens 5 an. Die Stirnseite 20 des Abstützrahmens 5 liegt wiederum bündig an der Oberfläche der Fahrbahn 3 an. Es wäre auch möglich, dass der Abschlussdeckel 8 zusätzlich die Stirnseite 20 des Abstützrahmens 5 überdeckt und bündig an der Oberfläche der Fahrbahn 3 anliegt.

Die Abstützeinrichtung 7 ist im oberen Drittel der Höhe des Antennengehäuses 6 ausgebildet. Dies bedeutet, dass der Schwerpunkt des Antennengehäuses 6 unterhalb der Abstützeinrichtung 7 liegt. Der Schwerpunkt des Antennengehäuses 6 liegt in dem Ausführungsbeispiel aus Figur 1 auch unterhalb des Abstützrahmens 5.

Die Abstützeinrichtung 7 könnte auch im mittleren Drittel, vorzugsweise in der Mitte der Höhe des Antennengehäuses 6 ausgebildet sein. Alternativ dazu könnte die Abstützeinrichtung 7 auch im unteren Drittel der Höhe des Antennengehäuses 6 ausgebildet sein.

Die Unterseite des Abschlussdeckels 8 weist im Längsschnitt zumindest im Zentralbereich 10 eine Einbuchtung, bzw. eine konkave Form auf, so dass der Zentralbereich 10 kontaktfrei oberhalb der benachbarten Oberseite 12 des Antennengehäuses 6 angeordnet ist. Bei einer Belastung des Abschlussdeckels 8 kann sich die Form der Einbuchtung, bzw. die im unbelasteten Zustand konkave Form verändern. Bei höchster Belastung kann die in Figur 1 dargestellte konkave Form des Zentralbereichs 10 parallel, aber dennoch beabstandet zur Oberseite 12 des Antennengehäuses 6 verlaufen.

Die Fläche des nach unten weisenden Zentralbereichs 10 beträgt zumindest 70%, bevorzugt zumindest 80%, weiter bevorzugt zumindest 90%, weiter bevorzugt zumindest 95% der gesamten nach unten weisenden Innenfläche des Abschlussdeckels 8. Die nach unten weisende Innenfläche des Abschlussdeckels 8 setzt sich dabei vorzugsweise einzig aus dem Randbereich 9 und dem Zentralbereich 10 zusammen.

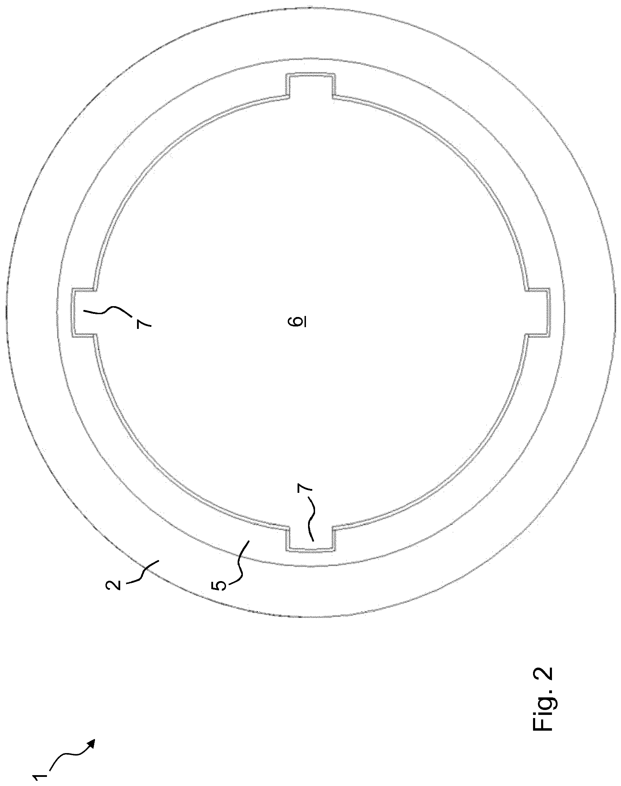

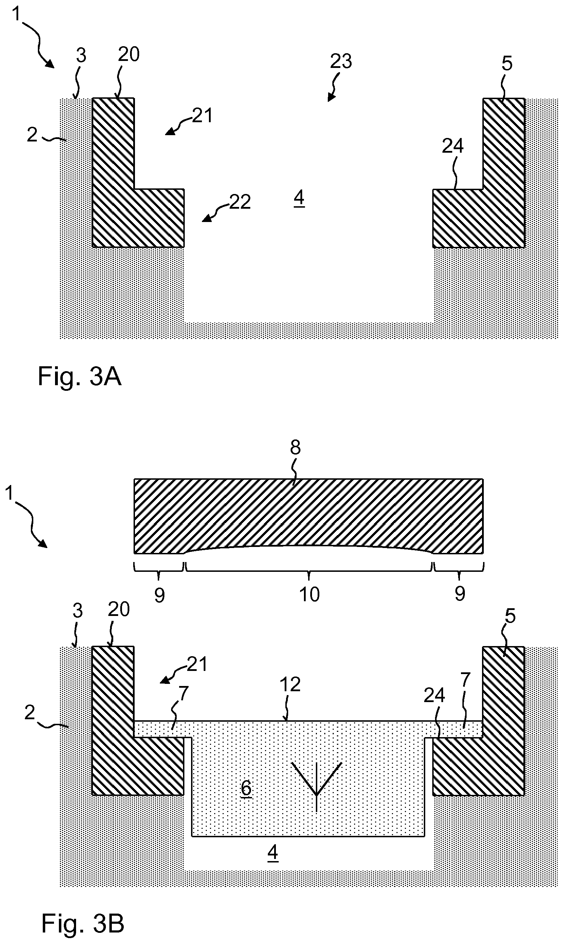

Figur 2 zeigt eine Draufsicht auf das erfindungsgemäße Schachtantennensystem 1 mit abgenommenem Abschlussdeckel 8. Der Abstützrahmen 5 ist in dem Boden 2 integriert. In den Abstützrahmen 5 ist das Antennengehäuse 6 eingehängt. Das Antennengehäuse 6 wird hierzu von Richtung der Einführöffnung 23, wie diese in Figur 3A dargestellt ist, in den Abstützrahmen 5 eingesetzt. Der Abstützrahmen 5 und die Einführöffnung 23 weisen in diesem Ausführungsbeispiel in Draufsicht die Querschnittsform, eines Kreises auf. Andere Querschnittsformen, wie die eines Quadrats, eines Rechtecks, eines Ovals oder eines regelmäßigen oder unregelmäßigen m-Polygon sind ebenfalls denkbar. Die Abstützeinrichtung 7 und das Antennengehäuse 6 sind in diesem Ausführungsbeispiel einteilig ausgebildet. Eine mehrteilige Ausbildung ist ebenfalls möglich. Bei der zumindest einen Abstützeinrichtung 7 handelt es sich in diesem Ausführungsbeispiel um n-Vorsprünge mit n = 4. Die n-Vorsprünge sind gleichweit voneinander beabstandet. Für den Fall, dass die Einführöffnung einen runden Querschnitt aufweist, sind die n-Vorsprünge um 360°/n voneinander beabstandet. Bei dem Einsatz von vier Vorsprüngen sind diese um 90° zueinander beabstandet.

Figur 3A zeigt einen Längsschnitt durch das erfindungsgemäße Schachtantennensystem 1, wobei einzig der Abstützrahmen 5 in einem vorbereiteten Schacht eingesetzt ist. Bei diesem vorbereiteten Schacht handelt es sich gleichzeitig um Aufnahmeraum 4. Kabel, mit denen die Antenne innerhalb des Antennengehäuses 6 gespeist wird, werden dem Aufnahmeraum 4 vorzugsweise unterirdisch zugeführt. Gleiches gilt auch für eine Stromversorgung.

Der Abstützrahmen 5 umfasst eine Rahmenoberseite 21 und eine Rahmenunterseite 22. Die Rahmenoberseite 21 befindet sich näher an der Fahrbahn 3, als die Rahmenunterseite 22. Über eine Einführöffnung 23, die an der Rahmenoberseite 21 ausgebildet ist, kann das Antennengehäuse 6 in den Abstützrahmen 5 eingelegt oder eingesetzt werden.

Der Abstützrahmen 5 umfasst außerdem ein erstes Auflager 24, bei dem es sich bevorzugt um eine Auflagerschulter oder um eine Auflagernase handelt. Das erste Auflager 24 ist in dem Ausführungsbeispiel aus Figur 3A parallel zu der Fahrbahn 3 und zu der Stirnseite 20 des Abstützrahmens 5 angeordnet.

Figur 3B zeigt einen Längsschnitt durch das erfindungsgemäße Schachtantennensystem 1, bei dem das Antennengehäuse 6 in den Abstützrahmen 5 eingehängt ist. Die Abstützeinrichtung 7, bei der es sich in dem Ausführungsbeispiel aus Figur 3B um Vorsprünge handelt, liegt auf dem ersten Auflager 24 auf. Das Antennengehäuse 6 stützt sich dadurch an dem Abstützrahmen 5 ab. Das Antennengehäuse 6 ist von dem Boden 2 in der Ausnehmung 4 beabstandet. Dabei ist das Antennengehäuse 6 sowohl an seiner Seitenumfangsfläche von dem Boden 2, als auch von seiner Unterseite von dem Boden 2 beabstandet.

Das Antennengehäuse 6 kann noch eine Signalaufbereitungseinheit umfassen. Hierzu zählen neben der Basisbandaufbereitung noch Verstärker, bzw. Dämpfungsglieder. In diesem Fall wäre es ausreichend, wenn in das Antennengehäuse 6 einzig eine Datenverbindung und eine Energieversorgung hinzugeführt würden. Bei der Datenverbindung kann es sich um eine Glasfaserleitung handeln und bei der Energieverbindung um ein einfaches Stromkabel. Ein Batteriebetrieb wäre auch möglich genauso wie der Einsatz des Schachtantennensystems 1 als Repeater. Die Batterie könnte außerdem mittels Solarzellen aufgeladen werden, die sich in der Umgebung befinden.

Zusätzlich wäre es möglich, dass zwischen der Abstützeinrichtung 7 und dem ersten Auflager 24 Dämpfungselemente ausgebildet sind. Derartige Dämpfungselemente sorgen dafür, dass Schwingungen, die von Personen oder Kraftfahrzeugen über den Abschlussdeckel 8, bzw. über die Fahrbahn 3 in den Boden eingeleitet werden, nur gedämpft bzw. vorteilhafterweise überhaupt nicht mehr an das Antennengehäuse 6 übertragen werden.

Unter einem Randbereich 9 des Abschlussdeckels 8 ist derjenige Bereich an der Unterseite des Abschlussdeckels 8 zu verstehen, an dem der Abschlussdeckel 8 zumindest mittelbar an dem Abstützrahmen 5 aufliegt.

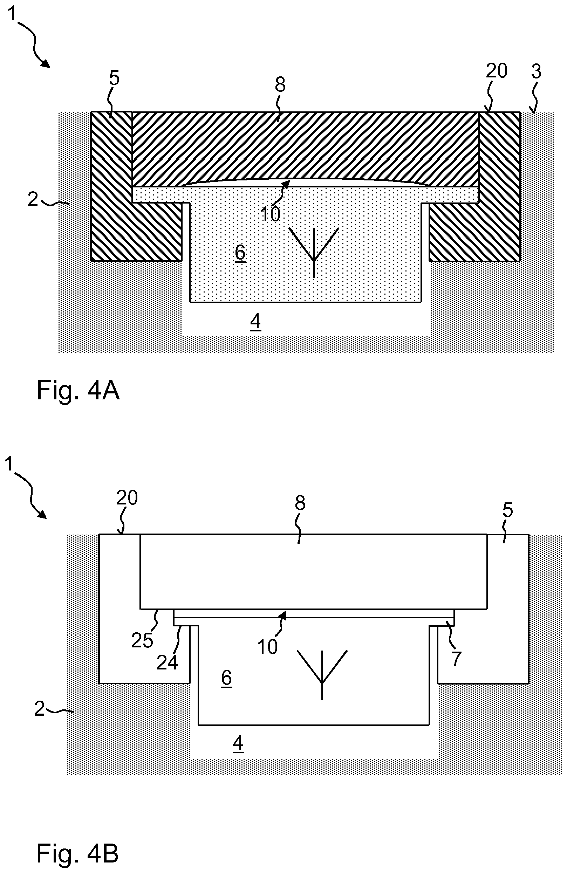

Figur 4A zeigt einen Längsschnitt durch das erfindungsgemäße Schachtantennensystem 1, wobei der Abschlussdeckel 8 mit seinem Randbereich 9 auf dem Teil der Abstützeinrichtung 7 des Antennengehäuses 6 aufliegt, der wiederum auf dem Abstützrahmen 5 aufliegt. Innerhalb von Figur 4A ist dargestellt, dass der Abschlussdeckel 8 über seinen Randbereich 9 mittelbar an dem Abstützrahmen 5 abgestützt ist. Wichtig ist, dass der Randbereich 9 nur mit den Teilen der Abstützeinrichtung 7 Kontakt hat, die wiederum fest auf dem ersten Auflager 24 aufliegen.

Figur 4B zeigt einen Längsschnitt durch das erfindungsgemäße Schachtantennensystem 1, wobei der Abschlussdeckel 8 mit seinem Randbereich 9 einzig auf dem Abstützrahmen 5 aufliegt und wobei die Abstützeinrichtung 7 des Antennengehäuses 6 ebenfalls einzig auf dem Abstützrahmen 5 aufliegt. Zur besseren Übersichtlichkeit sind die Schraffuren des Abstützrahmens 5, des Antennengehäuses 6 und des Abschlussdeckels 8 weggelassen.

Der Abschlussdeckel 8 liegt an der Unterseite seines Randbereichs 9 einzig auf einem zweiten Auflager 25 an. Dagegen liegt die Abstützeinrichtung 7 auf dem ersten Auflager 24 an. Es wäre auch möglich, dass der Abschlussdeckel 8 an seiner Unterseite seines Randbereichs 9 sowohl auf dem zweiten Auflager 25, als auch auf dem Teil Abstützeinrichtung 7 aufliegt, der wiederum auf dem ersten Auflager 24 aufliegt.

Bei dem zweiten Auflager 25 handelt es sich ebenfalls um eine Auflageschulter oder um eine Auflagenase. Der Abstützrahmen 5 umfasst dabei neben dem ersten Auflager 24 noch das zweite Auflager 25, das sich ebenfalls in Richtung des Aufnahmeraums 4 erstreckt. Ein Auflagefläche des zweiten Auflagers 25 ist dabei näher an der Rahmenoberseite 21 angeordnet, als eine Auflagefläche des ersten Auflagers 24. Das erste Auflager 24 erstreckt sich in diesem Ausführungsbeispiel weiter in Richtung des Aufnahmeraums 4, als das zweite Auflager 25. Die Auflagefläche des ersten Auflagers 24 ist parallel zu der Auflagefläche des zweiten Auflagers 25. Beide Auflageflächen verlaufen parallel zu der Stirnseite 20 des Abstützrahmens 5, bzw. parallel zu der Fahrbahn 3, bzw. parallel zu einer Oberseite 12 des Antennengehäuses 6.

Der Einsatz des ersten und zweiten Auflagers 24, 25, die voneinander getrennt sind, bewirkt eine hervorragende mechanische Endkopplung des Abschlussdeckels 8 zu dem Antennengehäuse 6. Schwingungen, die in den Abschlussdeckel 8 eingeleitet werden, werden über das zweite Auflager 25 in den Abstützrahmen 5 abgeleitet und treten nicht oder nur sehr stark gedämpft an dem Antennengehäuse 6 auf.

Der Abschlussdeckel 8 besteht aus einem nichtleitenden Material, insbesondere aus einem Kunststoff. Gleiches gilt für das Antennengehäuse 6, welches ebenfalls aus einem Kunststoff besteht. Innerhalb des Antennengehäuses 6 können zusätzliche Reflektoren aus Metall angeordnet sein, damit das Signal, welches die innerhalb des Antennengehäuses 6 angeordneten Antennen aussenden, nicht in den Boden 2, sondern vom Aufnahmeraum 4 in Richtung der Einführöffnung 23 und damit nach außen gesendet wird. Auch der Abstützrahmen 5, der auch als Abstützring bezeichnet werden kann, ist bevorzugt aus einem nichtleitenden Material, also aus einem Dielektrikum gebildet.

Der Abschlussdeckel 8 umfasst bevorzugt einen Durchmesser von mehr als 20cm, bevorzugt von mehr als 30cm, weiter bevorzugt von mehr als 40cm, aber vorzugsweise von weniger als 50cm. Der Abschlussdeckel 8 sollte einer Belastung von bis zu 40 Tonnen standhalten.

Der Abschlussdeckel 8 ist separat von dem Abstützrahmen 5 und dem Antennengehäuse 6 ausgebildet. Der Abschlussdeckel 8 ist mechanisch von dem Antennengehäuse 6 entkoppelt.

Das Schachtantennensystem 1 dient dabei zur Bodenmontage. Eine Montage an Wänden wäre ebenfalls möglich.

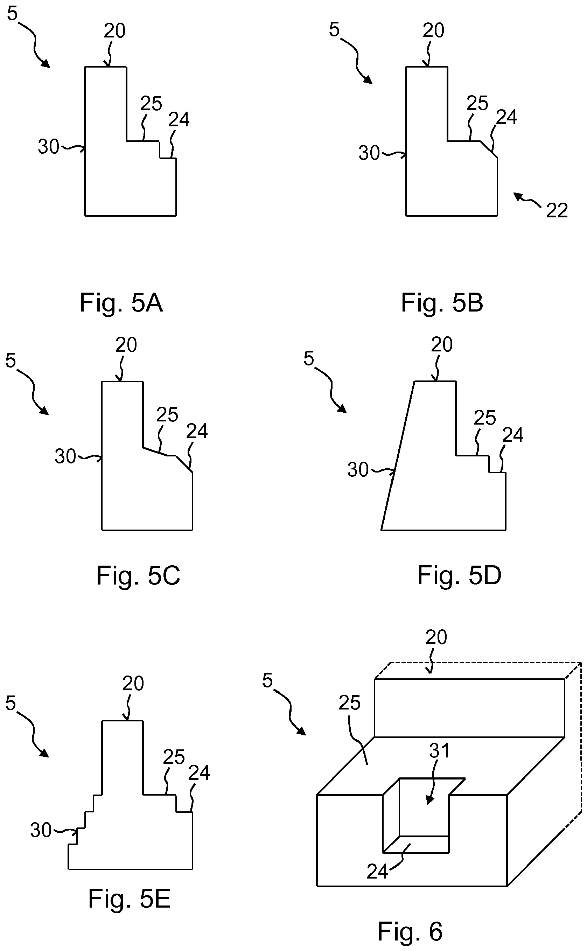

Die Figuren 5A bis 5E zeigen verschiedene Längsschnitte durch einen Teil des Abstützrahmens 5. Innerhalb von Figur 5A umfasst der Abstützrahmen 5 ein erstes Auflager 24 und ein von dem ersten Auflager 24 beabstandetes zweites Auflager 25, welches näher an der Stirnseite 20 angeordnet ist. Eine Umfangsseite 30 des Abstützrahmens 5 ist parallel zu einer Zentralachse angeordnet, welche das Schachtantennensystem 1 durchsetzt. Die Umfangsseite 30 steht dabei senkrecht zur Stirnseite 20.

Innerhalb von Figur 5B verjüngt sich das erste Auflager 24 von der Rahmenoberseite 21 hin zur Rahmenunterseite 22 über seinen gesamten Bereich konisch. Innerhalb des Ausführungsbeispiels aus Figur 5B wäre es auch möglich, dass sich das erste Auflager 24 zumindest abschnittsweise konisch von der Rahmenoberseite 21 hin zur Rahmenunterseite 22 verjüngt.

Innerhalb von Figur 5C sind ebenfalls ein erstes Auflager 24 und ein zweites Auflager 25 ausgebildet. Neben dem ersten Auflager 24 verjüngt sich auch das zweite Auflager 25 von der Rahmenoberseite 21 hin zur Rahmenunterseite 22 konisch. In diesem Fall verjüngt es sich abschnittsweise konisch.

Innerhalb von Figur 5D gibt es ebenfalls ein erstes Auflager 24 und ein zweites Auflager 25 die parallel zu der Stirnseite 20 des Abstützrahmens 5 verlaufen. Die Umfangsseite 30 verläuft dagegen schräg. Dies bedeutet, dass sich der Abstützrahmen 5 von der Fahrbahn 3, also von der Rahmenoberseite 21 in Richtung der Rahmenunterseite 22 verbreitert. Die Umfangsseiten 30 divergieren von der Rahmenoberseite 21 hin zur Rahmenunterseite 22. Ein abschnittsweises Divergieren wäre ebenfalls möglich, wie dies in Figur 5E gezeigt ist. Der Verlauf innerhalb von Figur 5D ist dabei stetig, vorzugsweise konisch.

Innerhalb von Figur 5E ist der Verlauf der Umfangsseiten 30 getapert, wobei der Abstützrahmen 5 an seiner Rahmenunterseite 22 breiter ist, als an seiner Rahmenoberseite 21. Beim Einsetzen in den Boden 2 wird um den Abstützrahmen 5 Erdreich eingebracht, wodurch sich dieser nicht mehr aus dem Boden 2 herausziehen lässt.

Figur 6 zeigt eine vereinfachte räumliche Darstellung eines Teils des Abstützrahmens 5. Dargestellt ist das zweite Auflager 25 und das erste Auflager 24. Das zweite Auflager 25 umfasst in diesem Ausführungsbeispiel zumindest eine Ausnehmung 31 durch die das erste Auflager 24 gebildet ist. Die Abstützeinrichtung 7, in Form eines Vorsprungs kann in diese Ausnehmung 31 eingreifen. Dadurch ist das Antennengehäuse 6 unverdrehbar in dem Abstützrahmen 5 angeordnet.

Die Abstützeinrichtung 7 ist dabei vorzugsweise weniger hoch als die Ausnehmung 31, so dass der Abschlussdeckel 8 mit seinem Randbereich 9 einzig auf den zweiten Auflager 25 aufliegt und nicht auf der Abstützeinrichtung 7. Dabei kann der Abschlussdeckel 8 mit seinem Randbereich 9 den Teil der Abstützeinrichtung 7 berührungslos überdecken, der in der Ausnehmung 31 angeordnet ist.

Es wäre allerdings auch möglich, dass die Abstützeinrichtung 7 bündig an der Oberfläche des zweiten Auflagers 25 anliegt. Im Weiteren wäre es auch möglich, dass die Abstützeinrichtung 7 über die Ausnehmung 31 nach oben, also in Richtung der Rahmenoberseite 21 vorsteht. In diesem Fall müsste der Randbereich 9 des Abschlussdeckels 8 eine entsprechende Aussparung aufweisen.

Innerhalb der Ausnehmung 31 können zusätzlich Dämpfungselemente angeordnet sein, die die Übertragung von Schwingungen innerhalb des Abstützrahmens 5 in Richtung des Antennengehäuses 6 erschweren.

Grundsätzlich gilt, dass das Antennengehäuse 6 über die Abstützeinrichtung 7 mit dem Abstützrahmen 5 verschraubt und/oder verklebt werden kann. Dies ist allerdings optional.

Der Abschlussdeckel 8 wird dagegen mit dem Abstützrahmen 5 verschraubt. Eine solche Schraubverbindung kann beispielsweise durch den Randbereich 9 in Richtung des zweiten Auflagers 25 erfolgen.

Bei allen Schraubverbindungen werden vorzugsweise Schrauben verwendet, die nicht elektrisch leitfähig sind.

Das erste Auflager 24 erstreckt sich weiter in Richtung des Aufnahmeraums 4, also in Richtung der Zentralachse, als das zweite Auflager 25.

Der Abstützrahmen 5 ist zusammen mit seinem ersten und zweiten Auflager 24, 25 einteilig ausgebildet.

Für den Fall, dass ein kleiner Spalt zwischen der Rahmenoberseite 21 und einer Seitenfläche des Abschlussdeckels 8 besteht, kann durch das erste, bzw. zweite Auflager 24, 25 eine Drainageöffnung verlaufen, die eindringendes Regenwasser in Richtung des Aufnahmeraums 4, bzw. in Richtung einer Kanalisation ableitet.

Das erfindungsgemäße Schachtantennensystem zeichnet sich noch durch das folgende Merkmal aus:
- die Fläche des nach unten weisenden Zentralbereichs 10 beträgt zumindest 70%, bevorzugt zumindest 80%, weiter bevorzugt zumindest 90%, weiter bevorzugt zumindest 95% der gesamten nach unten weisenden Innenfläche des Abschlussdeckels 8.

Zudem zeichnet sich das erfindungsgemäße Schachtantennensystem noch das folgende Merkmal aus:
- die n Vorsprünge sind gleichweit voneinander beabstandet.

Ergänzend zeichnet sich das erfindungsgemäße Schachtantennensystem noch das folgende Merkmal aus:
- die nach oben weisende Außenseite 13 des Abschlussdeckels 8 liegt bündig an einer Stirnseite 3 des Abstützrahmens 5 an.

Außerdem zeichnet sich das erfindungsgemäße Schachtantennensystem durch das folgende Merkmal aus:
- das Antennengehäuse 6 ist in dem Abstützrahmen 5 ein- oder aufgehängt gehalten.

Die Erfindung ist nicht auf die beschriebenen Ausführungsbeispiele beschränkt. Im Rahmen der Erfindung sind alle beschriebenen und/oder gezeichneten Merkmale beliebig miteinander kombinierbar.

Abschließend wird ferner noch darauf hingewiesen, dass die erläuterte Antennenanordnung sowohl in Straßen als auch auf Gehwegen oder in Parkanlagen insbesondere unterirdisch angeordnet und verbaut werden kann. Aber auch eine Anbringung der Antennenanordnung in Tunnels, auf Brücken oder in Gebäuden ist möglich. Die Erfindung bietet dabei vor allem überall dort deutliche Vorteile, wo eine Entkopplung von Vibrationen und eine Verringerung oder Vermeidung von Druckbelastungen auf das Antennengehäuse erforderlich ist. Dies gilt gleichermaßen für Straßenvibrationen wie für Vibrationen in Gebäuden.

## Patentansprüche

1. Schachtantennensystem zur mobilen Kommunikation mit folgenden Merkmalen:
- einem Abstützrahmen (5) mit einer Rahmenober- (21) und einer Rahmenunterseite (22), und einer in Höhe der Rahmenoberseite (21) befindlichen Einführöffnung (23), an die sich ein Aufnahmeraum (4) anschließt,
- einem Abschlussdeckel (8), der die Einführöffnung (23) und den Aufnahmeraum (4) des Abstützrahmens (5) verschließt, wobei der Abschlussdeckel (8) an seinem Randbereich (9) zumindest mittelbar an dem Abstützrahmen (5) abgestützt ist,
**dadurch gekennzeichnet, dass**
- zumindest eine Breitbandantenne zur Übertragung von Sprach-, Video- und Breitbanddiensten vorgesehen ist,
- ein Antennengehäuse (6) vorgesehen ist, in welchem die zumindest eine Breitbandantenne eingebracht ist,
- der Abschlussdeckel (8) einen Zentralbereich (10) aufweist, dessen nach unten weisende Fläche zumindest 60% der gesamten nach unten weisenden Innenfläche des Abschlussdeckels (8) beträgt, wobei der Zentralbereich (10) kontaktfrei oberhalb der benachbarten Oberseite (12) des Antennengehäuses (6) zu dieser angeordnet ist,
- das Antennengehäuse (6) in dem Aufnahmeraum (4) angeordnet ist und die Innenseite des Abschlussdeckels (8) eine Oberseite (12) des Antennengehäuses (6) überdeckt,
- das Antennengehäuse (6) zumindest eine Abstützeinrichtung (7) aufweist, durch die das Antennengehäuse (6) innerhalb des Abstützrahmens (5) gehalten ist;
- eine Unterseite des Abschlussdeckels (8) im Längsschnitt zumindest im Zentralbereich (10) eine Einbuchtung oder eine konkave Form aufweist, sodass der Zentralbereich (10) kontaktfrei oberhalb der benachbarten Oberseite (12) des Antennengehäuses (6) angeordnet ist.

2. Schachtantennensystem nach Anspruch 1, **gekennzeichnet durch** die folgenden Merkmale:
- bei der zumindest einen Abstützeinrichtung (7) handelt es sich um n Vorsprünge, mit n ≥ 2, oder um einen umlaufenden Flansch;
- die n Vorsprünge oder der umlaufende Flansch liegen auf einem ersten Auflager (24) auf;
- das erste Auflager (24) ist Teil des Abstützrahmens (5) und erstreckt sich in Richtung des Aufnahmeraums (4) .

3. Schachtantennensystem nach Anspruch 2, **gekennzeichnet durch** das folgende Merkmal:
- das erste Auflager (24) ist:
a) von der Rahmenoberseite (21) zu der Rahmenunterseite (22) zumindest abschnittsweise konisch verjüngt; und/oder
b) zumindest teilweise parallel zu einer Stirnseite (20) des Abstützrahmens (5) ausgebildet.

4. Schachtantennensystem nach einem der Ansprüche 2 oder 3, **gekennzeichnet durch** das folgende Merkmal:
- der Abschlussdeckel (8) liegt an einer Unterseite seines Randbereichs (9) einzig auf dem Teil der zumindest einen Abstützeinrichtung (7) auf, der wiederum auf der ersten Auflage (24) aufliegt.

5. Schachtantennensystem nach einem der Ansprüche 2 bis 4, **gekennzeichnet durch** das folgende Merkmal:
- der Abschlussdeckel (8) liegt an einer Unterseite seines Randbereichs (9):
a) einzig auf einem zweiten Auflager (25); oder
b) sowohl auf einem zweiten Auflager (25), als auch auf dem Teil der Abstützeinrichtung (7) auf, der wiederum auf dem ersten Auflager (24) aufliegt.

6. Schachtantennensystem nach einem der Ansprüche 2 bis 5 oder nach Anspruch 5, **gekennzeichnet durch** das folgende Merkmal:
- bei dem ersten und/oder zweiten Auflager (24, 25) handelt es sich um eine Auflageschulter oder um eine Auflagernase.

7. Schachtantennensystem nach Anspruch 5 oder 6, **gekennzeichnet durch** die folgenden Merkmale:
- der Abstützrahmen (5) umfasst neben dem ersten Auflager (24) noch das zweite Auflager (25), das sich in Richtung des Aufnahmeraums (4) erstreckt;
- eine Auflagefläche des zweiten Auflagers (25) ist näher an der Rahmenoberseite (21) angeordnet, als eine Auflagefläche des ersten Auflagers (24);
- das erste Auflager (24) erstreckt sich weiter in Richtung des Aufnahmeraums (4) als das zweite Auflager (25) oder
das zweite Auflager (25) umfasst zumindest eine Ausnehmung (31) durch die das erste Auflager (24) gebildet ist;

8. Schachtantennensystem nach einem der Ansprüche 5 bis 7, **gekennzeichnet durch** die folgenden Merkmale:
- die Auflagefläche des ersten Auflagers (24) ist parallel zu der Auflagefläche des zweiten Auflagers (25); und/oder
- das zweite Auflager (25) ist:
a) von der Rahmenoberseite (21) zu der Rahmenunterseite (22) zumindest abschnittsweise konisch verjüngt; und/oder
b) zumindest teilweise parallel zu einer Stirnseite (3) des Abstützrahmens (5) ausgebildet.

9. Schachtantennensystem nach einem der vorherigen Ansprüche, **gekennzeichnet durch** die folgenden Merkmale:
- die Abstützeinrichtung (7) ist im oberen Drittel der Höhe des Antennengehäuses (6) ausgebildet; oder
- die Abstützeinrichtung (7) ist im mittleren Drittel, vorzugsweise in der Mitte der Höhe des Antennengehäuses (6) ausgebildet; oder
- die Abstützeinrichtung (7) ist im unteren Drittel der Höhe des Antennengehäuses (6) ausgebildet.

10. Schachtantennensystem nach einem der vorherigen Ansprüche, **dadurch gekennzeichnet, dass** die Querschnittsform des Abstützrahmens (5) und/oder der Einführöffnung (23) in Draufsicht einem
- Quadrat; oder
- einem Rechteck; oder
- einem Oval; oder
- einem Kreis; oder
- einem regelmäßigen oder unregelmäßigen n-Polygon entspricht oder angenähert ist.

11. Schachtantennensystem nach einem der vorherigen Ansprüche, **gekennzeichnet durch** das folgende Merkmal:
- der Abstützrahmen (5) weist Umfangsseiten (30) auf, die von der Rahmenoberseite (21) zur Rahmenunterseite (22) zumindest abschnittsweise divergieren.

12. Schachtantennensystem nach einem der vorherigen Ansprüche, **gekennzeichnet durch** die folgenden Merkmale:
- zwischen dem Abstützrahmen (5) und dem Abschlussdeckel (8) ist zumindest ein Dichtelement ausgebildet; und/ oder
- zwischen dem Abstützrahmen (5) und dem Antennengehäuse (6) ist zumindest ein Dichtelement ausgebildet; und/ oder
- das Antennengehäuse (6) ist wasserdicht.

13. Verwendung eines Antennengehäuses mit den folgenden Merkmalen:
es ist zumindest eine Breitbandantenne eingebracht, wobei das Antennengehäuse (6) zur Verankerung oder Aufhängung an seiner Außenseite eine Abstützeinrichtung (7) aufweist, worüber das Antennengehäuse (6) in einem das Antennengehäuse (6) aufnehmenden und durch einen Abschlussdeckel (8) zumindest weitgehend kraftbeaufschlagungsfrei verschließbaren Abstützrahmen (5) veranker- und/oder einhängbar ist, **dadurch gekennzeichnet, dass** das Antennengehäuse zum Einbau in einen Stützrahmen (5) mit zugehörigem Abschlussdeckel (8) unter Erzeugung eines Schachtantennensystems nach einem der Ansprüche 1 bis 12 ausgebildet ist.

## Claims

1. Shaft antenna system for mobile communication, comprising the following features:
- a support frame (5) with an upper frame side (21) and a lower frame side (22), and an insertion opening (23) located at the level of the upper frame side (21) and to which a receiving space (4) is adjoined,
- a cover plate (8), which closes the insertion opening (23) and the receiving space (4) of the support frame (5), the cover plate (8) being supported at least indirectly on the support frame (5) in the edge region (9) thereof,
**characterised in that**
- at least one broadband antenna is provided for the transmission of voice, video and broadband services,
- an antenna housing (6) is provided, into which at least one broadband antenna is introduced,
- the cover plate (8) comprises a central region (10), the downwardly pointing surface thereof accounting for at least 60% of the entire downwardly pointing inner surface of the cover plate (8), the central region (10) being arranged without contact above the adjacent upper side (12) of the antenna housing (6) relative thereto,
- the antenna housing (6) is arranged in the receiving space (4) and the inner side of the cover plate (8) covers an upper side (12) of the antenna housing (6),
- the antenna housing (6) comprises at least one support apparatus (7), by means of which the antenna housing (6) is retained within the support frame (5);
- in longitudinal section, at least in the central region (10) the underside of the cover plate (8) has an indentation or a concave shape, such that the central region (10) is arranged without contact above the adjacent upper side (12) of the antenna housing (6).

2. Shaft antenna system according to claim 1, **characterised by** the following features:
- the at least one support apparatus (7) is formed by n projections, where n ≥ 2, or is a peripheral flange;
- the n projections or the peripheral flange rest on a first support (24);
- the first support (24) is part of the support frame (5) and extends towards the receiving space (4).

3. Shaft antenna system according to claim 2, **characterised by** the following feature:
- the first support (24):
a) tapers conically, at least in portions, from the upper frame side (21) towards the lower frame side (22); and/or
b) is in parallel with an end face (20) of the support frame (5) at least in part.

4. Shaft antenna system according to any of claims 2 or 3, **characterised by** the following feature:
- the cover plate (8) rests on the underside of the edge region (9) thereof, solely on the part of the at least one support apparatus (7) that in turn rests on the first support (24).

5. Shaft antenna system according to any of claims 2 to 4, **characterised by** the following feature:
- the cover plate (8) rests on an underside of the edge region (9) thereof:
a) solely on a second support (25); or
b) both on a second support (25) and on the part of the support apparatus (7) that in turn rests on the first support (24).

6. Shaft antenna system according to any of claims 2 to 5 or according to claim 5, **characterised by** the following feature:
- the first and/or the second supports (24, 25) are support shoulders or support lugs.

7. Shaft antenna system according to either claim 5 or claim 6, **characterised by** the following features:
- in addition to the first support (24), the support frame (5) also comprises a second support (25), which extends towards the receiving space (4);
- a support surface of the second support (25) is arranged closer to the upper frame side (21) than a support surface of the first support (24);
- the first support (24) extends further towards the receiving space (4) than the second support (25), or
the second support (25) comprises at least one recess (31), by means of which the first support (24) is formed.

8. Shaft antenna system according to any of claims 5 to 7, **characterised by** the following features:
- the support surface of the first support (24) is in parallel with the support surface of the second support (25); and/or
- the second support (25):
a) tapers conically, at least in portions, from the upper frame side (21) towards the lower frame side (22); and/or
b) is in parallel with an end face (3) of the support frame (5) at least in part.

9. Shaft antenna system according to any of the preceding claims, **characterised by** the following features:
- the support apparatus (7) is formed in the upper third of the vertical extension of the antenna housing (6); or
- the support apparatus (7) is formed in the middle third of the vertical extension of the antenna housing (6), preferably in the middle of the vertical extension thereof; or
- the support apparatus (7) is formed in the lower third of the vertical extension of the antenna housing (6).

10. Shaft antenna system according to any of the preceding claims, **characterised in that** the cross-sectional shape of the support frame (5) and/or the insertion opening (23) corresponds to or approximates, in plan view,
- a square; or
- a rectangle; or
- an oval; or
- a circle; or
- a regular or irregular n-polygon.

11. Shaft antenna system according to any of the preceding claims, **characterised by** the following feature:
- the support frame (5) comprises peripheral sides (30) that diverge from the upper frame side (21) towards the lower frame side (22) at least in portions.

12. Shaft antenna system according to any of the preceding claims, **characterised by** the following features:
- at least one sealing element is formed between the support frame (5) and the cover plate (8); and/or
- at least one sealing element is formed between the support frame (5) and the antenna housing (6); and/or
- the antenna housing (6) is watertight.

13. Use of an antenna housing with the following features: at least one broadband antenna is introduced, wherein the antenna housing (6) comprises a support apparatus (7) for anchorage or mounting on its outer side, by means of which apparatus the antenna housing (6) can be anchored and/or suspended in a support frame (5) that receives the antenna housing (6) and can be closed by a cover plate (8) at least largely without being loaded by forces, **characterised in that** the antenna housing is designed for installation in a support frame (5) comprising an associated cover plate (8), to produce a shaft antenna system according to any of claims 1 to 12.

## Revendications

1. Système d'antenne de puits pour la communication mobile avec les caractéristiques suivantes :
- un châssis support (5) avec une face de châssis supérieure (21) et une face de châssis inférieure (22), et un orifice d'introduction (23) se situant à la hauteur de la face supérieure de châssis (21), auquel s'associe un espace de logement (4),
- un couvercle d'obturation (8) qui ferme l'orifice d'introduction (23) et l'espace de logement (4) du châssis support (5), où le couvercle d'obturation (8) au niveau de sa zone de bordure (9) est appuyé au moins indirectement sur le châssis support (5),
**caractérisé en ce**
- **qu'**au moins une antenne à large bande est prévue pour la transmission de services vocaux, en vidéo et en bande large,
- un boitier d'antenne (6) est prévu dans lequel l'au moins une antenne à large bande est logée,
- le couvercle d'obturation (8) présente une zone centrale (10) dont la surface orientée vers le bas correspond à au moins 60 % de la surface intérieure totale du couvercle d'obturation (8) orientée vers le bas, où la zone centrale (10) est disposée sans contact par rapport à celle-ci au-dessus de la face supérieure (12) voisine du boitier d'antenne (6),
- le boitier d'antenne (6) est disposé dans l'espace de logement (4) et la face intérieure du couvercle d'obturation (8) recouvre une face supérieure (12) du boitier d'antenne (6),
- le boitier d'antenne (6) présente au moins un dispositif de support (7) par lequel le boitier d'antenne (6) est maintenu à l'intérieur du châssis support (5) ;
- une face inférieure du couvercle d'obturation (8) en coupe longitudinale présente une échancrure ou une forme concave au moins dans la zone centrale (10) de sorte que la zone centrale (10) est disposée sans contact au-dessus de la face supérieure (12) voisine du boitier d'antenne (6).

2. Système d'antenne de puits selon la revendication 1, **caractérisé par** les caractéristiques suivantes :
- dans le cas de l'au moins un dispositif de support (7), il s'agit de n protubérances, avec n ≥ 2, ou d'un épaulement périphérique ;
- les n protubérances ou l'épaulement périphérique se situent sur un premier support (24) ;
- le premier support (24) fait partie du châssis support (5) et s'étend en direction de l'espace de logement (4).

3. Système d'antenne de puits selon la revendication 2, **caractérisé par** la caractéristique suivante :
- le premier support (24) est :
a) amenuisé de manière conique au moins par endroits à partir de la face supérieure de châssis (21) jusqu'à la face inférieure de châssis (22), et/ou est
b) conçu au moins partiellement parallèle par rapport à une face frontale (20) du châssis support (5).

4. Système d'antenne de puits selon l'une des revendications 2 ou 3, **caractérisé par** la caractéristique suivante :
- le couvercle d'obturation (8) repose au niveau d'une face inférieure de sa région de bordure (9) uniquement sur la partie de l'au moins un dispositif de support (7) qui, à son tour, repose sur le premier support (24).

5. Système d'antenne de puits selon l'une des revendications 2 à 4, **caractérisé par** la caractéristique suivante :
- le couvercle d'obturation (8) se situe au niveau d'une face inférieure de sa région de bordure (9) :
a) seul sur un deuxième support (25) ; ou
b) à la fois sur un deuxième support 25) et sur une partie du dispositif de support (7) qui, à son tour, repose sur le premier support (24).

6. Système d'antenne de puits selon l'une des revendications 2 à 5 ou selon la revendication 5, **caractérisé par** la caractéristique suivante :
- dans le cas du premier et/ou du deuxième support (24, 25), il s'agit d'un épaulement de dépose ou d'une proéminence de support.

7. Système d'antenne de puits selon la revendication 5 ou la revendication 6, **caractérisé par** les caractéristiques suivantes :
- le châssis support (5) comprend, à côté du premier support (24), encore le deuxième support (25) qui s'étend en direction de l'espace de logement (4) ;
- une surface de dépose du deuxième support (25) est plus proche de la face supérieure de châssis (21) qu'une surface de dépose du premier support (24) ;
- le premier support (24) s'étend davantage en direction de l'espace de logement (4) que le deuxième support (25), ou le deuxième support (25) comprend au moins un évidement (31) par lequel est formé le premier support (24) ;

8. Système d'antenne de puits selon l'une des revendications 5 à 7, **caractérisé par** les caractéristiques suivantes :
- la surface de dépose du premier support (24) est parallèle à la surface de dépose du deuxième support (25) ; et/ou
- le deuxième support (25) est :
a) amenuisé de manière conique au moins par endroits à partir de la face supérieure de châssis (21) jusqu'à la face inférieure de châssis (22), et/ou est
b) conçu au moins partiellement parallèle par rapport à une face frontale (3) du châssis support (5).

9. Système d'antenne de puits selon l'une des revendications précédentes, **caractérisé par** les caractéristiques suivantes :
- le dispositif de support (7) est conçu dans le tiers supérieur de la hauteur du boitier d'antenne (6) ; ou
- le dispositif de support (7) est conçu dans le tiers du milieu, de préférence au milieu, de la hauteur du boitier d'antenne (6) ; ou
- le dispositif de support (7) est dans le tiers inférieur de la hauteur du boitier d'antenne (6).

10. Système d'antenne de puits selon l'une des revendications précédentes, **caractérisé en ce que** la forme de la section transversale du châssis support (5), et/ou de l'orifice d'introduction (23), dans une vue plongeante, correspond ou s'approche
- d'un carré ; ou
- d'un rectangle ; ou
- d'un ovale ; ou
- d'un cercle ; ou
- d'un n-polygone régulier ou irrégulier.

11. Système d'antenne de puits selon l'une des revendications précédentes, **caractérisé par** la caractéristique suivante :
- le châssis support (5) présente des faces périphériques (30) qui sont au moins divergentes par endroits en partant de la face supérieure de châssis (21) vers la face inférieure de châssis (22) .

12. Système d'antenne de puits selon l'une des revendications précédentes, **caractérisé par** les caractéristiques suivantes :
- au moins un joint est formé entre le châssis support (5) et le couvercle d'obturation (8) ; et/ou
- au moins un joint est formé entre le châssis support (5) et le boitier d'antenne (6) ; et/ou
- le boitier d'antenne (6) est étanche à l'eau.

13. Utilisation d'un boitier d'antenne avec les caractéristiques suivantes :
au moins une antenne à large bande est logée, où le boitier d'antenne (6) présente un dispositif de support (7) pour l'ancrage ou la suspension sur son côté extérieur, par lequel le boitier d'antenne (6) peut être ancré et/ou suspendu dans un châssis support (5) recevant le boitier d'antenne (6) et pouvant être fermé au moins largement sans l'application d'une force par un couvercle d'obturation (8), **caractérisée en ce que** le boitier d'antenne est conçu pour un montage dans un châssis support (5) avec un couvercle d'obturation (8) correspondant moyennant la création d'un système d'antenne de puits selon l'une des revendications 1 à 12.
